# EUROPÄISCHE PATENTSCHRIFT

(11) **EP 2 496 460 B1**
(45) Veröffentlichungstag und Bekanntmachung des Hinweises auf die Patenterteilung: **26.06.2013**
(21) Anmeldenummer: 10771728.2
(22) Anmeldetag: 27.10.2010
(51) Int. Cl.: B62B 3/14

(54) **RÜCKHALTEGURT FÜR KINDER IN EINEM EINKAUFSWAGEN**
RESTRAINING BELT FOR CHILDREN IN A SHOPPING CART
CEINTURE DE RETENUE POUR ENFANTS DANS UN CHARIOT DE SUPERMARCHÉ

(30) Priorität: 02.11.2009 DE 202009014783 U
(43) Veröffentlichungstag der Anmeldung: 12.09.2012
(73) Patentinhaber: Sonnendorfer, Horst, 82178 Puchheim (DE); Wieth, Franz, 82178 Puchheim (DE)
(72) Erfinder: Sonnendorfer, Horst, 82178 Puchheim (DE); Wieth, Franz, 82178 Puchheim (DE)
(74) Vertreter: Braun-Dullaeus, Karl-Ulrich
(86) Internationale Anmeldenummer: PCT/EP2010/066227
(87) Internationale Veröffentlichungsnummer: WO 2011/051318

(56) Entgegenhaltungen:
- DE-U1-202005 012 535
- FR-A1- 2 836 446
- US-A- 3 350 136
- US-A- 5 439 253
- US-A- 5 931 482

## Beschreibung

### Technisches Gebiet

Die Erfindung betrifft Rückhaltegurte für Kinder in Einkaufswagen

### Stand der Technik

Ein derartiger Rückhaltegurt ist aus der DE 202005012535 U1 bekannt.

Dieser Rückhaltegurt befindet sich in einem flachen Gehäuse. Dieses Gehäuse weist angeformte Befestigungselemente auf, welche eine einfache und schnelle Schnappbefestigung an den Gitterstäben eines Einkaufswagens ermöglicht.

Es hat sich gezeigt, dass die Abstände der Gitterstäbe je nach Modell des Einkaufswagens nicht einheitlich sind.

Es müssen für die unterschiedlichen Einkaufswagen Modelle unterschiedliche Gehäuse mit jeweils auf die Gitterabstände der jeweiligen Einkaufswagen Modelle angepassten Befestigungen bereitgestellt werden, was in nachteiliger Weise die Teilevielfalt erhöht.

Auch hat es sich gezeigt, dass Bedarf für zwei Rückhaltegurte in einem Einkaufswagen besteht und hierdurch nochmals mehr unterschiedliche Varianten für die Befestigung bereitgestellt werden müssen, was die Teilevielfalt abermals erhöht.

Zudem hat sich gezeigt, dass die mechanischen Anforderungen für die Befestigung des Gehäuses auch auf die Situation abgestimmt sein muss, die sich daraus ergibt, dass das Gehäuse für den Gurt an Teilen des Einkaufswagens befestigt sind, die wiederholt aufgeklappt und wieder zusammen geklappt werden.

Die Gesamtheit dieser beweglichen Teile wird in der Fachsprache "Babyklappe" genannt. Diese Babylslappen - Konstruktion ist in die rückwärtige Wand des Einkaufswagens integriert, welche im Bedarfsfall eine Lehne und einen Sitzbereich für das Kleinkind zur Verfügung stellt. Ansonsten liegen alle Teile der Konstruktion im wesentlichen flach an der hinteren Korbwand an.

Die Babyklappen - Konstruktion besteht aus zwei Klappen. Die eine Klappe, welche die Lehne des Kindersitzes bildet ist mit ihrer unteren Kante etwa im unteren Drittel der hinteren Korbwand drehbar gelagert und ragt mit ihrer Oberkante etwas über dem Niveau der Griffstange hinaus. Diese Klappe nennt man Lehnenklappe.

Die andere Klappe bildet das Sitzelement. Diese Klappe ist etwa in der Mitte der hinteren Seitenwand drehbar gelagert und wird Sitzflächenklappe genannt.

Im Bedarfsfall, wenn der Kindersitz benötigt wird, wird die Lehnenklappe um ihr Lager verschwenkt und bildet mit der Rückwand des Einkaufswagens einen Winkel von etwa 20 Grad.

An der Seite der Lehnenklappe, welche dem Schiebegriff zugewandt ist befindet sich das Gehäuse des Rückhaltegurtes. Das Gehäuse ist etwas unter der oberen Kante der Lehnenklappe angebracht und liegt direkt auf den Gitterstäben auf.

Beim Verschwenken der Lehnenklappe bewegt sich die Sitzflächenklappe aus einer Position, in welcher sie sich im wesentlichen parallel zu der Lehnenklappe befindet in eine Position, in welcher die Sitzflächenklappe und die Lehnenklappe in einem Winkel von etwa 90 Grad zueinander stehen.

In der Rückwand des Einkaufskorbes befinden sich zwei Öffnungen für die Beine eines im Kindersitz sitzenden Kleinkindes. Die Unterkanten dieser Öffnungen befinden sich auf dem Niveau der Sitzflächenklappe.

Bei manchen Einkaufswagen Modellen ist noch eine weitere Klappe vorhanden. Diese Klappe wird Verschlussklappe genannt und ermöglicht es, die in der Rückwand vorgesehenen Öffnungen für die Beine zu verschließen. Hierdurch entsteht ein vom übrigen Korbinhalt getrenntes Ablagefach am Einkaufswagen.

Für die Lage der Sitzflächenklappe in der Ausgangsposition sind zwei Möglichkeiten gegeben. In der einen Möglichkeit ist die Sitzflächenklappe bezogen auf die Lagerung an der Rückwand nach unten geklappt, in der anderen Position ist die Sitzflächenklappe bezogen auf die Lagerung an der Rückwand nach oben geklappt und wandert beim Bewegen der Lehnenklappe entlang der Stäbe der Lehnenklappe.

Wenn der Kindersitz nicht benötigt wird, wird die Lehnenklappe wieder in die Position verschwenkt, in welcher sie parallel zur hinteren Korbwand liegt.

Es hat sich nun gezeigt, dass beim Verschwenken der Lehnenklappe und den dadurch ausgelösten Bewegungen von Sitzflächenklappe und Verschlussklappe es zu einer Berührung dieser Teile mit dem Gehäuse für den Rückhaltgurt kommt.

Obwohl das Gehäuse für den Rückhaltgurt schon sehr flach gestaltet ist, führt dies in seltenen Fällen zu einem Klemmen der Teile.
Einen gattungsgemäßen Rückhaltegurt für Kinder in Einkaufswagen zeigt das FR 2 836 446 A1. Weitere Rückhaltegurte für Kinder in Einkaufswagen sind aus dem US 5 439 253 A und dem US 3 350 136 A bekannt.

### Offenbarung der Erfindung

### Technische Aufgabe

Es ist Aufgabe der Erfindung einen Rückhaltegurt für Kinder zu schaffen, welcher eine universelle Befestigungsmöglichkeit für die unterschiedlichen Gitterstab-Durchmesser und Gitterstab- Abstände der unterschiedlichen Einkaufswagen Modelle aufweist und die einfache und sichere Befestigung eines Gehäuses für einen oder zwei Rückhaltegurten ermöglicht.

Eine weitere Aufgabe der Erfindung ist es, die Befestigung für das Gehäuses des Rückhaltegurtes so zu gestalten, dass beim Bewegen der Babyklappen-Konstruktion die Sitzflächenklappe oder die Verschlussklappe vom Gehäuse des Rückhaltegurtes angewiesen werden, um ein Klemmen der Teile zu verhindern.

### Technische Lösung

Diese Aufgaben werden gelöst durch ein Befestigungselement, welches jeweils einen Gitterstab u-förmig umschließt und zudem über klammerartige Vorsprünge verfügl welche zwischen den einzelnen Gitterstäben hindurchreichen. Diese klammerartigen Vorsprünge haben Nuten, in welche die Kanten des Gehäuses für den Rückhaltegurt eingreifen. Hierdurch ist das Gehäuse formschlüssig mit den Gitterstäben der Lehnenklappe verbunden.

In einer Weiterbildung ist das Befestigungselement so ausgebildet dass im Zwischenraum zwischen den einzelnen Gitterstäben eine Anlagefläche für das Gehäuse des Rückhaltegurtes bereitstellt ist. Diese Anlagefläche verläuft eben mit den Gitterstäben als wodurch das Gehäuse des Rückhaltegurtes so nahe als möglich an der Lehnenklappe befestigbar ist.

Das Befestigungselement .

Die klammerartigen Vorsprünge des Befestigungselements sind als schräge Anlaufflächen ausgebildet und weisen hierdurch die Sitzflächenklappe oder die Verschlussklappe vom Gehäuse des Rückhaltegurtes ab.

In einer Weiterbildung ist eine im Befestigungselement integrierte Klemmverbindung vorgesehen, welche einen Kraftschluss zwischen dem Gitterstab und dem Befestigungselement ermöglicht.

### Vorteilhafte Wirkungen

Durch die vorliegende Erfindung wird vorteilhaft erreicht, dass eine universelle Befestigung des Gehäuses an den unterschiedlichen Einkaufswagen Modellen mit wenigen Teilen möglich ist.

Die Formgebung des Befestigungselements mit schrägen Anlaufflächen verhindert ein Klemmen von Teilen beim Zusammenklappen der Babyklappe.

### Kurze Beschreibung der Zeichnungen

Nachfolgend wird die Erfindung anhand zweier Figuren beschrieben.

Es zeigen im Einzelnen:

Figur 1 in geschnittener Darstellung das Gehäuse für den Rückhaltegurt, das Befestigungselement und einen Gitterstab des Einkaufswagens von der Seite aus betrachtet,
Figur 2 in geschnittener Darstellung das Befestigungselement und einen Gitterstab von oben aus betrachtet.

Das Gehäuse 1 ist im wesentlichen flach ausgebildet mit geschwungenen Kanten, die zu Stegen 2 im oberen und unteren Rand des Gehäuses auslaufen.

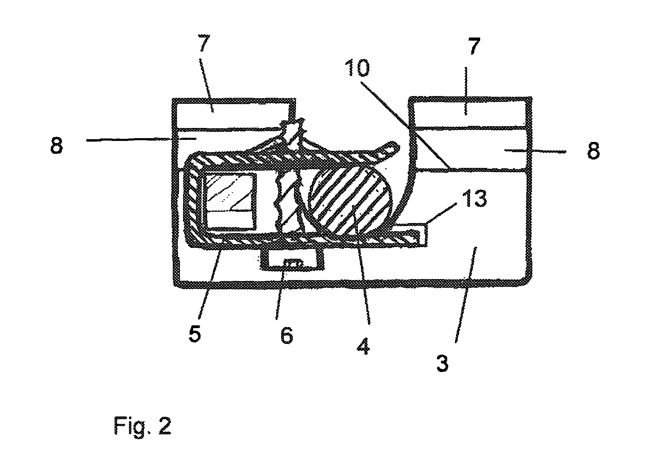

Das Befestigungselement 3 umschlingt den Gitterstab 4. Die Umschlingung ist in der Figur 2 genau gezeigt. Durch eine Klemme 5, welche den Gitterstab 4 umgreift und deren Klemmwirkung durch die Schraube 6 bewerkstelligt wird entsteht eine kraftschlüssige Verbindung zwischen Befestigungselement 3 und Gitterstab 4. Wenn die Schraube 6 noch nicht festgezogen ist, entsteht allein durch die Klemme 5 schon ein gewisser Kraftschluss, der ausreicht, um das Befestigungselement 3 am Gitterstab 4 zu halten, aber immer noch ein Verschieben des Befestigungselements 3 entlang des Gitterstabes 4 ermöglicht.

Die klammerartigen Vorsprünge 7 des Befestigungselementes 3 ragen durch die Gitterstäbe hindurch und weisen Nuten 8 auf. In diese Nuten 8 greifen die Stege 2 des Gehäuses 1 ein.

In der gewählten Darstellung ist deutlich sichtbar, dass das Gehäuse 1 plan auf dem Gitterstab 4 aufliegt und das auf der gegenüberliegenden Seite des Gitterstabes positionierte Befestigungselement keinen Raum auf der Seite des Gitterstabes benötigt, auf der das Gehäuse 1 anliegt.

Der Abstand zwischen der Innenseite der Nut 8 und dem Gitterstab 4 ist mit der Breite der Stege 2 so abgestimmt, dass das Gehäuse 1 direkt am Gitterstab 4 anliegt. Die klammerartigen Vorsprünge 7 können auch elastisch ausgebildet sein, wodurch das Gehäuse 1 am Gitterstab stets unter Vorspannung anliegt.

Die Schraube 6 reicht durch die Klemme 5 hindurch bis in einen Kanal 9 des Gehäuses 1.

Dieser Kanal 9 verläuft über die gesamte Längsseite des Gehäuses 1 in einer Vertiefung 10. Die Breite und Tiefe des Kanals 9 ist auf die Abmessung der Schraube 6 abgestimmt.

Beim Festziehen der Schraube 6, - welches stattfindet, nachdem das Befestigungselement 3 entlang des Gitterstabes 4 endgültig positioniert wurde und nachdem das die Kanten 2 des Gehäuses 1 in die Nuten 8 eingesetzt worden sind - dringt die Schraube 6 in den Kanal 9 ein und schneidet sich ein Gewinde in die Wände des Kanals 9.

So entsteht durch das Festziehen der Schraube 6 neben dem erhöhten Kraftschluss zwischen dem Gitterstab 4 und dem Befestigungselement 3 auch ein Formschluss zwischen Schraube 6 und Gehäuse 1.

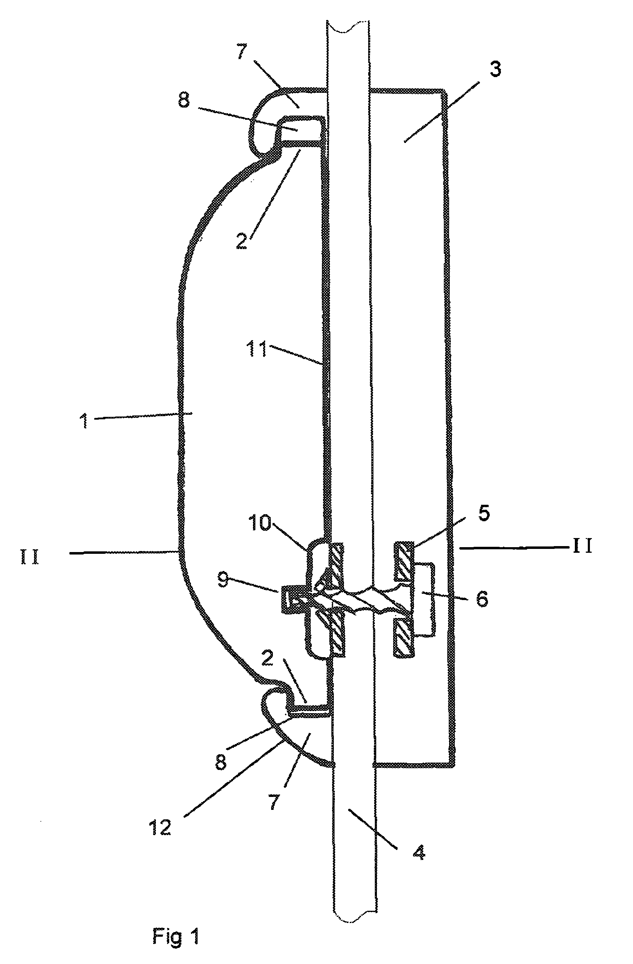

Die Darstellung in Figur 1 zeigt nur 1 Befestigungselement 3, für die Befestigung des Gehäuses 1 am Einkaufswagen sind jedoch mindestens zwei Befestigungselemente 3 vorgesehen, bei einem Gehäuse für zwei Rückhaltegurte welches entsprechend länger ist, können noch weitere Befestigungselemente 3 in der beschriebenen Weise eingesetzt werden.

Dadurch, dass der Kanal 9 und die Stege 2 über das ganze Gehäuse verlaufen ist es problemlos möglich das Gehäuse 1 symmetrisch im Einkaufswagen zu positionieren. Besonders vorteilhaft ist hierbei, dass das Gehäuse 1 auch dann symmetrisch montierbar ist, wenn die an die Lage der Gitterstäbe gebundenen Befestigungselemente für sich betrachtet nicht symmetrisch montierbar sind.

Die Rückseite des Gehäuses 1 liegt tangential auf den Gitterstäben und plan auf einer von den Befestigungselementen bereitgestellten Anlagefläche 10 auf.

Der untere klammerartige Vorsprung 7 hat eine schräge Anlauffläche 12, welche beim Zusammenklappen des Kindersitzes ein bewegliches Teil so ableitet, dass das bewegliche Teil sich nicht mit dem Gehäuse 1 verklemmen kann. Ein solches bewegliches Teil kann die Sitzfläche der Kindersitzes oder einen andere Klappe der Babyklappen Konstruktion sein.

Die Figur 2 zeigt von oben betrachtet einen Schnitt entlang der Linie II- II in Figur 1, jedoch aus Gründen der Übersichtlichkeit ohne das Gehäuse 1.

Das Befestigungselement 3 umgreift den Gitterstab 4 u-förmig. Der Gitterstab 4 liegt mit einer Seite am Befestigungselement 3 an, die Form des Befestigungselementes 3 ist auf die Dicke des Gitterstabes 4 so abgestimmt, dass die Anlageflächen 10 tangential zum Radius des Gitterstabes 4 verlaufen. Je nach Dicke des Gitterstabes 4 sind entsprechende Befestigungselemente 3 vorgesehen.

Die Gitterstäbe der Einkaufswagen haben in den meisten Fällen einen Durchmesser von 3,5 mm oder 4,5 mm. Es ist somit möglich mit nur zwei verschiedenen Befestigungselementen das Gehäuse für den Rückhaltgurt an einer Vielzahl von verschiedenen Modellen der Einkaufswagen anzubringen.

Die klammerartigen Vorsprünge 7 weisen eine Nut 8 auf. Bei der Montage des Befestigungselementes 3 am Gitterstab 4 wird zunächst das Befestigungselement 3 um den Gitterstab 4 gelegt und anschließend wird die Klammer 5 seitlich in einen Schlitz 13 des Befestigungselementes 3 eingeschoben Die Klammer 5 liegt dann an zwei gegenüberliegenden Seiten des Gitterstabes 4 an. Noch bevor die Schraube 6 festgezogen wird, entsteht so eine kraftschlüssige Verbindung, welche das Befestigungsteil 3 schon am Gitterstab 4 hält, aber dennoch noch ein leichtes Positionieren ermöglicht.

Die Erfindung ist sowohl anwendbar für die Befestigung von Gehäusen für Rückhaltegurte, bei denen sich ein Rückhaltegurt im Gehäuse befindet, als auch für die Befestigung von Gehäusen, in denen sich zwei Rückhaltegurte befinden.

Die Erfindung ist gewerblich anwendbar Bei der Befestigung von Gehäusen für Rückhaltegurte an einem Einkaufswagen, als auch für die Befestigung von anderen Elementen, etwas Werbetafeln an den Gitterstäben eines Einkaufswagens.

## Patentansprüche

1. Rückhaltegurt für Kinder in einem Einkaufswagen, wobei sich der Gurt in einem am Einkaufswagen befestigbaren Gehäuse befindet, wobei ein Befestigungselement (3) vorgesehen ist, durch welches jeweils ein Gitterstab (4) des Einkaufswagens u-förmig umschließbar ist und das Befestigungselement (3) klammerartige Vorsprünge (7) aufweist, welche zwischen den einzelnen Gitterstäben (4) hindurchreichen können,
**dadurch gekennzeichnet,**
**dass** diese klammerartigen Vorsprünge (7) Nuten (8) haben und in diese Nuten (8) Kanten (2) des Gehäuses (1) eingreifen.

2. Rückhaltegurt für Kinder in einem Einkaufswagen nach Anspruch 1,
**dadurch gekennzeichnet,**
**dass** das Gehäuse (1) für den Rückhaltegurt an den Gitterstäben (4) direkt anliegen kann.

3. Rückhaltegurt für Kinder in einem Einkaufswagen nach Anspruch 1 oder 2,
**dadurch gekennzeichnet,**
**dass** die klammerartigen Vorsprünge (7) elastisch ausgebildet sind.

4. Rückhaltegurt für Kinder in einem Einkaufswagen nach einem der vorangegangenen Ansprüche,
**dadurch gekennzeichnet,**
**dass** die klammerartigen Vorsprünge (7) des Befestigungselements (3) eine schräge Anlauffläche (12) aufweisen.

5. Rückhaltegurt für Kinder in einem Einkaufswagen nach einem der vorangegangenen Ansprüche,
**dadurch gekennzeichnet,**
**dass** eine im Befestigungselement (3) integrierte Klemmverbindung (5) vorgesehen ist, durch welche ein Kraftschluss zwischen dem Gitterstab (4) und dem Befestigungselement (3) herstellbar ist.

6. Rückhaltegurt für Kinder in einem Einkaufswagen nach einem der vorangegangenen Ansprüche,
**dadurch gekennzeichnet,**
**dass** über eine Schraube (6) eine formschlüssige Verbindung zwischen Gehäuse (1) und Befestigungselement (3) herstellbar ist.

## Claims

1. A restraining belt for children in a shopping trolley, wherein the belt is situated in a housing able to be fastened to the shopping trolley, wherein a fastening element (3) is provided, by which respectively a lattice bar (4) of the shopping trolley is able to be clasped around in a U-shape, and the fastening element (3) has clamp-like projections (7), which can extend through between the individual lattice bars (4), **characterized in that**
these clamp-like projections (7) have grooves (8) and edges (2) of the housing (1) engage into these grooves (8).

2. The restraining belt for children in a shopping trolley according to Claim 1,
**characterized in that**
the housing (1) for the restraining belt can lie directly against the lattice bars (4).

3. The restraining belt for children in a shopping trolley according to Claim 1 or 2,
**characterized in that**
the clamp-like projections (7) are constructed so as to be elastic.

4. The restraining belt for children in a shopping trolley according to one of the preceding claims, **characterized in that**
the clamp-like projections (7) of the fastening element (3) have an oblique run-on surface (12).

5. The restraining belt for children in a shopping trolley according to one of the preceding claims, **characterized in that**
a clamping connection (5) integrated in the fastening element (3) is provided, by which a force fit is able to be produced between the lattice bar (4) and the fastening element (3).

6. The restraining belt for children in a shopping trolley according to one of the preceding claims, **characterized in that**
a form-fitting connection between the housing (1) and the fastening element (3) is able to be produced by means of a screw (6).

## Revendications

1. Ceinture de retenue pour enfants dans un chariot de supermarché, la ceinture se trouvant dans un boîtier pouvant se fixer sur un chariot de supermarché, un élément de fixation (3) permettant d'entourer en forme de U chaque fois un barreau de grille (4) du chariot de supermarché étant prévu et l'élément de fixation (3) comportant des saillies (7) de type crampons, qui peuvent passer à travers chacun des barreaux de grille, **caractérisée en ce que** les saillies (7) de type crampons sont munies de rainures (8) et que dans lesdites rainures (8) s'engagent des arêtes (2) du boîtier (1).

2. Ceinture de retenue pour enfants dans un chariot de supermarché selon la revendication 1, **caractérisée en ce que** le boîtier (1) pour la ceinture de retenue peut être directement adjacent aux barreaux de grille (4).

3. Ceinture de retenue pour enfants dans un chariot de supermarché selon la revendication 1 ou la revendication 2, **caractérisée en ce que** les saillies (7) de type crampons sont conçues en version élastique.

4. Ceinture de retenue pour enfants dans un chariot de supermarché selon l'une quelconque des revendications précédentes, **caractérisée en ce que** les saillies (7) de type crampon de l'élément de fixation (3) comportent une surface d'arrêt (12) inclinée.

5. Ceinture de retenue pour enfants dans un chariot de supermarché selon l'une quelconque des revendications précédentes, **caractérisée en ce qu'**il est prévu une liaison par serrage (5) intégrée dans l'élément de fixation (3) permettant d'établir une complémentarité de force entre le barreau de grille (4) et l'élément de fixation (3).

6. Ceinture de retenue pour enfants dans un chariot de supermarché selon l'une quelconque des revendications précédentes, **caractérisée en ce que** par l'intermédiaire d'une vis (6), une liaison par complémentarité de forme peut être établie entre le boîtier (1) et l'élément de fixation (3).
